# FASCICULE DE BREVET EUROPEEN

(11) **EP 0 976 685 B1**
(45) Date de publication et mention de la délivrance du brevet: **27.08.2003**
(21) Numéro de dépôt: 99401646.7
(22) Date de dépôt: 01.07.1999
(51) Int. Cl.: C03B 5/24

(54) **Dispositif de conduite des fours de fusion et/ou d'affinage de verre**
Vorrichtung zum Regeln der Schmelzung und/oder Entgasung von Glasschmelzofen
Device for controlling glass melting and/or refining furnaces

(30) Priorité: 29.07.1998 FR 9809706
(43) Date de publication de la demande: 02.02.2000
(73) Titulaire: STEIN HEURTEY, Société Anonyme:, 91130 Ris Orangis (FR)
(72) Inventeur: Borysowicz, Alicja, 91680 Bruyères le Châtel (FR); Lepert, Stéphane, 91420 Morangis (FR)
(74) Mandataire: Armengaud Ainé, Alain

(56) Documents cités:
- EP-A- 0 748 773

## Description

La présente invention concerne le contrôle des fours de fusion de verre en vue d'en automatiser le fonctionnement, y compris lors des transitoires, d'améliorer la qualité du verre produit et de réduire les consommations de combustibles ainsi que la quantité de rejets de polluants. Cette invention peut s'appliquer à tout type de fours de fusion et/ou d'affinage de verre : à chauffage à flammes, à boucle ou flammes transversales, à chauffage électrique ou mixte (flamme + électrique) et à tout type de verre produit.

La présente invention se propose donc d'apporter un dispositif de contrôle de la fusion du mélange vitrifiable du type régulation floue conçu de façon à réaliser automatiquement tout ou partie de l'ensemble des opérations de contrôle des paramètres de fonctionnement du four ainsi que tout ou partie de l'ensemble des opérations de commande des actionneurs de commande des équipements du four, à partir des stratégies qui seraient mises en oeuvre par un opérateur réalisant manuellement ces opérations.

On sait que le réglage d'un four de verrerie est une opération particulièrement délicate et complexe notamment en raison du nombre très important de paramètres intervenant dans la conduite du four et de la grande inertie de ces fours ainsi que de l'évolution très lente des paramètres et des phénomènes intervenant dans le contrôle de la fusion du verre.

Il en résulte que la conduite des fours de verrerie reste le plus souvent empirique, se limitant généralement à l'ajustement des températures de la voûte du four par des actions manuelles sur des dispositifs de contrôle agissant sur les actionneurs de commande des équipements de chauffage du four, de refroidissement ou sur les équipements d'alimentation en mélange vitrifiable. Ces actions font généralement appel à l'expérience de l'opérateur ainsi qu'à l'analyse qu'il réalise du comportement du four et du bain de verre qu'il contient, en particulier de son estimation visuelle des conditions dans lesquelles s'effectue la fusion et/ou l'affinage de la composition de verre à l'intérieur du four.

Il résulte de cet empirisme que le principe de prise de décision pour des actions à engager en regard d'une situation donnée du four est difficile à formaliser.
Afin de résoudre ce problème, les opérateurs dressent généralement des tables présentant l'état de l'ensemble des paramètres mesurables du four, dans une configuration de production donnée, afin de tenter de reproduire ces paramètres dans une situation de production analogue. Le nombre de paramètres en jeu ainsi que l'absence de la connaissance de leurs relations ou imbrications rendent cette opération complexe lors du fonctionnement stabilisé du four. Elle est encore plus difficile lors des transitoires, tels que changement de production ou changement de teinte par exemple. On conçoit que la conduite d'un four de verrerie ne peut être effectuée que par des opérateurs qualifiés et disposant d'une grande expérience.

Les décisions prises dépendent donc souvent de l'expérience ou des habitudes de chaque opérateur et il en résulte que toute généralisation des principes de la conduite du four est extrêmement difficile. Les opérateurs, dans leur conduite du four, se réservent un coefficient de sécurité par rapport aux conditions de fonctionnement optimales de manière à ne pas risquer une dégradation de la qualité du verre, ce processus se traduisant par une limitation du rendement ou des performances du four.

Le mode manuel de conduite du four de verrerie se révèle encore plus limité lors de la gestion des transitoires qui correspondent à des changements de tonnage du four ou à des changements de type ou de couleur du verre ou autres.

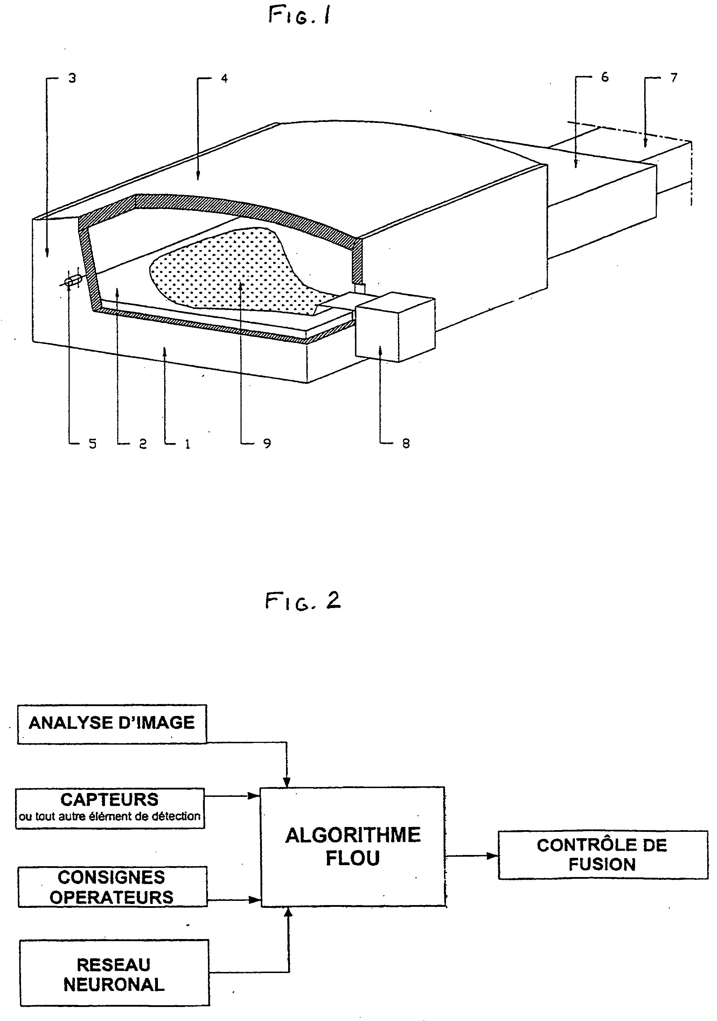

On se réfère maintenant à la figure 1 des dessins annexés qui représentent de façon schématique, en perspective et avec arrachement partiel, un exemple de réalisation d'un four de fusion de verre auquel peut s'appliquer la présente invention.

Ce four, de façon connue, est constitué principalement d'une cuve 1, en matériaux réfractaires, dans laquelle est fondu le verre 2. Cette cuve comporte des parois latérales 3 en matériaux réfractaires ainsi qu'une voûte 4. Le chauffage de l'enceinte du four est assuré à l'aide de brûleurs 5 qui sont implantés sur l'une au moins des parois du four.

Le verre fondu et affiné est conditionné en température dans une zone du four généralement dénommée avant-bassin 6 puis il est distribué vers des équipements de mise en forme schématisés par la référence 7 qui peuvent être de tout type connu notamment machines de formage de verre creux (bouteilles), équipement de mise en forme de la feuille de verre en vue de l'obtention de verre plat (verre à vitre).

Le mélange vitrifiable est introduit dans le four par l'intermédiaire d'un ou plusieurs dispositifs du type enfoumeuse 8, implantés sur une ou plusieurs des parois du four, ces dispositifs déposant et poussant le mélange vitrifiable à la surface du verre fondu, sous la forme de mottes indépendantes ou d'un tapis 9 de composition déterminée.

Les parois 3 du four comportent en outre un certain nombre d'ouvertures (non représentées sur le dessin) afin de permettre aux opérateurs d'observer la fusion du verre dans l'enceinte du four, la forme des flammes du brûleur, le développement de la composition à la surface du bain de verre, le fonctionnement des bouillonneurs, etc.

Le four comporte en outre un certain nombre de capteurs et de moyens de détection pour mesurer les paramètres de fonctionnement du four et de ses équipements périphériques tels que l'avant-bassin 6, les circuits de carburants et de comburants, les circuits de fumées, les circuits de refroidissement, tous les circuits de fluide ainsi que les positions des actionneurs (vannes de régulation, variateurs de puissance électrique, etc.), organes de contrôle de position et autres. Les valeurs ainsi mesurées correspondent à chaque état de la grandeur ou du paramètre observé (températures, débits, pressions, vitesses, positions ...).

Partant de cet état de la technique, la présente invention se propose d'apporter un dispositif de contrôle et de conduite de la fusion et/ou de l'affinage du mélange vitrifiable dans un four de fusion du verre, qui réalise de façon automatique tout ou partie de l'ensemble des opérations de contrôle des paramètres de fonctionnement du four ainsi que tout ou partie de l'ensemble des opérations de commande des actionneurs du four, à partir des stratégies qui seraient mises en oeuvre par un opérateur réalisant manuellement ces opérations. Le dispositif objet de la présente invention est caractérisé en ce qu'il comprend :
- un dispositif d'analyse et de contrôle du type régulateur flou utilisant un algorithme de commande de type logique floue qui reçoit l'ensemble des informations relatives au fonctionnement du four provenant des capteurs et des moyens de détection prévus sur ce four ainsi que les valeurs de consigne introduites manuellement par les opérateurs, cet algorithme de commande délivrant des signaux de commande aux divers actionneurs et moyens de contrôle du four et,
- un système prédictif du type neuronal et/ou flou qui, en fonction de l'état initial du four et de ses paramètres et de la modification de l'un au moins desdits paramètres, détermine l'évolution prévisionnelle dans le temps de l'état du four et de ses paramètres, cette évolution prévisionnelle de l'état du four étant utilisée comme donnée d'entrée du régulateur flou qui détermine les nouvelles valeurs de consigne des actionneurs du four nécessaires pour maintenir un fonctionnement optimum du four compatible avec les objectifs définis.

Cette évolution prévisionnelle de l'état du four et de ses paramètres fait partie des données d'entrée du régulateur du type logique floue qui va déterminer les consignes devant être appliquées aux différents actionneurs de commande et de contrôle des équipements du four afin de maintenir les objectifs définis par l'opérateur tels que par exemple, les températures de voûte ou la qualité du verre produit.

Selon un mode de réalisation du dispositif de contrôle objet de la présente invention, ce dernier comporte en outre un dispositif d'apprentissage ou de calcul qui est utilisé durant la phase d'apprentissage du système prédictif de type neuronal et/ou flou, c'est-à-dire durant la phase d'acquisition des lois de fonctionnement du four. Selon l'invention, ce dispositif d'apprentissage, de détermination ou de calcul met en oeuvre un modèle de calcul du type modèle numérique permettant de définir les lois régissant le fonctionnement du four, soit à partir de l'apprentissage de ce système prédictif, sur le four proprement dit, soit par simulation du fonctionnement du four à l'aide d'un modèle mathématique.

Selon un mode de réalisation préféré du dispositif objet de l'invention, ce dernier comporte en outre, un moyen d'acquisition et de traitement de l'image de l'intérieur du four, opérant dans le spectre visible, infrarouge ou autre, pouvant être constitué par un système de caméras vidéo positionné dans le four pour observer des zones correspondant à un phénomène lié à la fusion et/ou à l'affinage du verre, les images ainsi obtenues étant ensuite traitées de manière à obtenir des informations relatives au phénomène observé, ces informations étant mises en forme en vue d'être introduites comme données d'entrée de l'algorithme de conduite du four afin de contrôler et de réguler le phénomène observé.

D'autres caractéristiques et avantages de la présente invention ressortiront de la description faite ci-après en référence au dessin annexé qui en illustre un mode de réalisation donné à titre d'exemple dépourvu de tout caractère limitatif.

Sur le dessin :
- La figure 1 est une vue schématique en perspective avec arrachement partiel représentant un exemple d'un four de fusion de verre, décrit ci-dessus, auquel peut s'appliquer la présente invention et,
- La figure 2 est un schéma fonctionnel illustrant le dispositif de contrôle objet de la présente invention.

Ainsi qu'on l'a précisé ci-dessus, le dispositif selon l'invention apporte un système de conduite et de contrôle de la fusion et/ou de l'affinage du mélange vitrifiable permettant de réaliser automatiquement en totalité ou en partie les opérations de contrôle des paramètres de fonctionnement du four et de commande de ses actionnneurs à partir des stratégies mises en oeuvre par un opérateur réalisant manuellement ces opérations.

Selon ce dispositif, on met en oeuvre :
- un dispositif d'analyse et de contrôle du type régulateur flou et,
- un dispositif prédictif de type neuronal et/ou flou.

Ce dispositif peut en outre comporter un système d'apprentissage ou de calcul de type modèle mathématique et un dispositif d'acquisition de traitement de l'image de l'intérieur du four.

Ainsi qu'on le comprend, le dispositif de contrôle objet de la présente invention repose sur un algorithme de commande de type logique floue qui reçoit les informations suivantes (cette énumération n'est nullement limitative) :
- Les informations de températures obtenues à partir de capteurs de températures implantés dans ou sur le four de fusion de verre ;
- les informations relatives aux débits et aux pressions des différents fluides utilisés par le four (carburant, comburant, fumées ainsi que leurs compositions, refroidissement , électricité) ainsi que les mesures de consommation pour chaque fluide, toutes ces informations étant délivrées par des capteurs ou des dispositifs de détection prévus dans ou sur le four) ;
- les informations concernant la position des différents actionneurs du four (vannes de régulation, variateurs de puissance électrique, débit de composition, etc);
- les informations des capteurs et fin de course des équipements du four;
- les valeurs de consignes qui sont introduites manuellement par les opérateurs dans le système de conduite du four ;
- les informations relatives à la qualité du verre produit, qui peuvent être saisies en tout point du processus de fabrication ;
- les informations du réseau neuronal ainsi qu'on le décrira en détails ci-après et,
- les informations provenant de l'analyse des images de l'intérieur du four ainsi qu'on le précisera ci-après.

L'algorithme de commande du régulateur flou délivre des signaux de commande notamment des éléments suivants (sans que cette énumération ait un caractère limitatif) :
- les équipements de combustion (brûleurs avec leurs équipements d'alimentation en carburant et en comburant) ;
- les équipements de chauffage ou d'appoint électriques ;
- les dispositifs d'affinage du verre (bouillonneurs, « boosting » ...) ;
- les systèmes du contrôle du four.

Les données de sortie de cet algorithme sont délivrées en fonction du traitement des informations d'entrée mentionnées ci-dessus et ce traitement est réalisé selon les principes de la logique floue en fonction des besoins spécifiques du système et selon les règles qui le régissent. Ces règles peuvent être soit introduites manuellement lors de la programmation du système, soit acquises par la logique floue durant une phase d'apprentissage, directement sur le four à contrôler.

Ainsi qu'on le comprend, le régulateur flou recueille l'ensemble des informations relatives au fonctionnement du four et provenant des capteurs et des systèmes de détection prévus dans ce dernier, en utilisant un algorithme de logique floue qui reproduit les principes et le savoir faire des opérateurs afin de déterminer l'actionneur ou la combinaison d'actionneurs du four la plus appropriée sur lequel il faut agir pour optimiser la conduite du four.

Le système prédictif de type neuronal et/ou flou permet, en fonction de l'état instantané du four et des modifications des matières qui y sont introduites ou de modifications programmées d'un au moins de ses paramètres, de déterminer l'état correspondant du four dans les heures qui suivent l'application de ces modifications. En d'autres termes, ce système permet, en fonction de l'état du four et des informations relatives à l'évolution de la production dans le temps, de déterminer, de façon prédictive, l'évolution de l'état du four ainsi que les valeurs que prendront ses divers paramètres pour cette étape.

Ainsi, en fonction de l'évolution prévisionnelle des paramètres décrivant l'état du four, ledit système prédictif va définir les différentes valeurs de consigne devant être attribuées à l'ensemble des actionneurs du four afin d'assurer un fonctionnement optimal de ce dernier pour chaque phase de production. En fonction des différents paramètres des productions à réaliser, ce système prédictif détermine les évolutions des valeurs des différentes consignes de manière à optimiser les phases transitoires. Cette optimisation tient compte des exigences du four, exigences relatives notamment à la qualité du produit fini, aux régimes de fonctionnement du four, comprises entre les limites de sécurité de ses composants, aux valeurs de consommation des différentes énergies nécessaires au fonctionnement du four, aux rejets de polluants, aux disponibilités des matières premières, etc.

L'ensemble de ces contraintes est pris en compte par ce système prédictif lequel, en fonction des possibilités du four telles que définies, détermine la stratégie de conduite optimale qui est matérialisée par des valeurs de consigne prévisionnelles à affecter aux différents actionneurs du four. Ces valeurs de consigne constituent des données d'entrée pour l'algorithme de logique floue de conduite du four.

Le dispositif de contrôle objet de l'invention peut également comporter un dispositif d'apprentissage, de détermination ou de calcul qui est utilisé durant la phase d'apprentissage du système prédictif de type neuronal et/ou flou, c'est-à-dire durant la phase d'acquisition des lois de fonctionnement du four. Ce dispositif qui peut utiliser un modèle de calcul de type modèle numérique permet de définir les lois régissant le fonctionnement du four soit à partir de l'apprentissage du système prédictif, sur le four proprement dit, soit par simulation du fonctionnement de ce four à l'aide d'un modèle mathématique.

Parmi les informations délivrées à l'algorithme de commande du régulateur flou, figurent celles relatives à l'image de l'intérieur du four. Selon l'un de ces aspects, le dispositif de contrôle objet de cette invention comporte des moyens d'acquisition et de traitement de l'image de l'intérieur du four. Dans ce but, l'intérieur du four est scruté par un dispositif d'acquisition d'images pouvant être constitué par une ou plusieurs caméras vidéo opérant dans le spectre visible, infra-rouge ou autres. Ces caméras sont positionnées dans les parois ou dans la voûte du four afin de surveiller une ou plusieurs zones correspondant à un phénomène lié à la fusion et/ou à l'affinage du verre. Ces phénomènes peuvent être :
- la répartition de la composition introduite dans le four, de la position des mottes, de leur vitesse ainsi que tout autre autre paramètre lié à l'aspect de la fusion de la composition à la surface du bain de verre ;
- le fonctionnement des brûleurs, notamment la forme et la répartition des flammes de ces derniers à l'intérieur du four ; afin de contrôler la répartition de la puissance thermique sur le verre et de limiter l'usure des réfractaires de super structure tels que les réfractaires des murs et de la voûte du four.
- le mouvement des courants de convection dans le bain de verre, notamment en vue d'optimiser la fusion et/ou l'affinage du verre, d'en contrôler la qualité et de limiter l'usure des réfractaires composant la cuve de rétention du verre dans le four ;
- le fonctionnement des bouillonneurs ;
- tout phénomène pouvant être observé à l'intérieur du four.

Les images ainsi obtenues sont traitées par l'électronique ou l'informatique de façon à permettre l'extraction d'informations relatives au phénomène observé. Ces informations sont mises en oeuvre de manière qu'elles puissent être introduites comme données d'entrée de l'algorithme de conduite du four afin de contrôler et de réguler le phénomène observé, ce qui permet ainsi d'effectuer une analyse automatique des phénomènes se développant à l'intérieur du four dans la partie fusion et/ou affinage du verre.

Les possibilités du calculateur sont utilisées pour intégrer le traitement de nombreux paramètres spécifiques au processus de fusion et/ou d'affinage du verre, ce qui est actuellement impossible dans les méthodes manuelles de conduite des fours de verrerie.

Parmi les avantages apportés par la présente invention, le dispositif de conduite automatique des fours objet de l'invention, on peut citer notamment les suivants :
- la conduite des fours est rendue indépendante de la perception subjective des opérateurs et de leur expérience ;
- prise en compte de l'intégralité des paramètres du processus de fusion du verre ainsi que de l'interaction de ces divers paramètres ;
- optimisation de la conduite des fours ;
- meilleure stabilité du fonctionnement des fours ;
- meilleur contrôle des transitoires ;
- meilleur contrôle de la combustion, donc des consommations et des rejets de polluants ;
- meilleur contrôle de la flamme des brûleurs ;
- meilleur contrôle de la répartition de la distribution de la puissance dans les différentes zones du four, donc de l'affinage du verre ;
- optimisation de la répartition entre les différentes sources d'énergie sur le four, par exemple entre les énergies d'origine fossile et électrique ;
- meilleure utilisation des outils d'affinage du verre, tels que les bouillonneurs ou les « boostings » électriques d'affinage ;
- limitation des usures des réfractaires grâce au contrôle des courants de convection dans le verre, ce qui permet d'augmenter les durées des campagnes des fours ;
- meilleur contrôle de la qualité du produit fini et amélioration de la qualité de ce dernier ;
- meilleure répétabilité des réglages du four pour des productions équivalentes ;
- réduction des consommations d'énergie et,
- réduction des rejets de polluants dans l'atmosphère.

Il demeure bien entendu que la présente invention n'est pas limitée aux exemples de réalisation décrits et/ou représentés ici mais qu'elle en englobe toutes les variantes entrant dans le cadre de l'invention tel que défini par les revendications annexées.

## Revendications

1. Dispositif de contrôle de la fusion du mélange vitrifiable dans un four de fusion du verre, qui réalise de façon automatique tout ou partie de l'ensemble des opérations de contrôle des paramètres de fonctionnement du four ainsi que tout ou partie de l'ensemble des opérations de commande des actionneurs du four, à partir des stratégies qui seraient mises en oeuvre par un opérateur réalisant manuellement ces opérations, ce dispositif étant **caractérisé en ce qu'**il comprend :
- un dispositif d'analyse et de contrôle du type régulateur flou utilisant un algorithme de commande de type logique floue qui reçoit l'ensemble des informations relatives au fonctionnement du four provenant des capteurs et des moyens de détection prévus sur ce four ainsi que les valeurs de consigne introduites manuellement par les opérateurs, cet algorithme de commande délivrant des signaux de commande aux divers actionneurs et moyens de contrôle du four et,
- un système prédictif du type neuronal et/ou flou qui, en fonction de l'état du four et des informations sur l'évolution de la production dans le temps définit les différentes valeurs de consigne à attribuer à l'ensemble des actionneurs du four, de façon à assurer un fonctionnement optimal pour chaque phase de production, lesdites valeurs de consigne constituant des valeurs d'entrée pour l'algorithme de logique floue assurant la conduite du four.

2. Dispositif de contrôle selon la revendication 1 **caractérisé en ce qu'**il comporte en outre un dispositif d'apprentissage ou de calcul qui est utilisé durant la phase d'apprentissage du système prédictif de type neuronal et/ou flou, c'est-à-dire durant la phase d'acquisition des lois de fonctionnement du four.

3. Dispositif de contrôle selon la revendication 2 **caractérisé en ce que** le dispositif d'apprentissage ou de calcul utilise un modèle de calcul de type modèle numérique permettant de définir les lois régissant le fonctionnement du four, soit à partir de l'apprentissage dudit système prédictif, sur le four proprement dit, soit par simulation du fonctionnement du four à l'aide d'un modèle mathématique.

4. Dispositif de contrôle selon l'une quelconque des revendications 1 à 3 **caractérisé en ce qu'**il comporte en outre, un moyen d'acquisition et de traitement de l'image de l'intérieur du four opérant dans le spectre visible, infrarouge ou autre, pouvant être constitué par une ou plusieurs caméras vidéo positionné(es) dans le four pour observer des zones correspondant à un phénomène lié à la fusion et/ou à l'affinage du verre, les images ainsi obtenues étant ensuite traitées de manière à obtenir des informations relatives au phénomène observé, ces informations étant mises en forme en vue d'être introduites comme données d'entrée de l'algorithme de conduite du four afin de contrôler et de réguler le phénomène observé.

5. Dispositif de contrôle selon la revendication 4 **caractérisé en ce que** ledit phénomène observé par le moyen d'acquisition et de traitement de l'image de l'intérieur du four est la répartition de la composition de verre introduite dans le four, de la position des mottes, de leur vitesse ainsi que des divers paramètres liés à l'aspect de la fusion de la composition à la surface du bain de verre.

6. Dispositif de contrôle selon la revendication 4 **caractérisé en ce que** ledit phénomène observé par le moyen d'acquisition et de traitement de l'image de l'intérieur du four est la forme et la répartition des flammes de ces derniers à l'intérieur du four, afin de contrôler la répartition de la puissance thermique et de limiter l'usure des réfractaires notamment des murs et de la voûte du four.

7. Dispositif de contrôle selon la revendication 4 **caractérisé en ce que** ledit phénomène observé par le moyen d'acquisition et de traitement de l'image de l'intérieur du four est le mouvement des courants de convection dans le bain de verre notamment en vue d'optimiser la fusion et/ou l'affinage dudit verre, d'en contrôler la qualité et de limiter l'usure des réfractaires composant la cuve de rétention dans le four de fusion de verre.

8. Dispositif de contrôle selon la revendication 4 **caractérisé en ce que** le phénomène observé par le moyen d'acquisition et de traitement de l'image de l'intérieur du four est le fonctionnement des bouillonneurs.

9. Dispositif de contrôle selon l'une quelconque des revendications précédentes **caractérisé en ce que** le système prédictif du type logique floue ou neuronal est conçu de façon à délivrer des informations utilisées par le régulateur flou pour la définition des consignes devant être appliquées aux différents actionneurs de commande et de contrôle des équipements du four, en fonctionnotamment des modifications du programme de production ou des modifications des matières introduites dans le four.

## Patentansprüche

1. Vorrichtung zur Regelung des Schmelzens des Glasrohstoffgemenges in einem Glasschmelzofen, welche automatisch ganz oder teilweise die Gesamtheit der Vorgänge zur Regelung der Betriebsparameter des Ofens und ganz oder teilweise die Gesamtheit der Vorgänge zur Steuerung der Stellglieder des Ofens ausführt, ausgehend von Strategien, die vom Bedienpersonal angewendet werden, das diese Vorgänge manuell durchführt, **dadurch gekennzeichnet, dass** sie
- eine Analyse- und Regeleinrichtung vom Typ Fuzzy-Regelung, in welcher ein Fuzzylogik-Regelungsalgorithmus angewendet wird, der alle den Ofenbetrieb betreffenden Informationen, die von Sensoren und Detektoren kommen, die in diesem Ofen vorgesehen sind, sowie die Sollwerte, die vom Bedienpersonal manuell eingegeben werden, erhält, wobei dieser Regelungsalgorithmus Steuersignale an die verschiedenen Stellglieder und Regelungsmittel des Ofens liefert, und
- ein neuronales und/oder Fuzzylogik-Vorhersagesystem, das in Abhängigkeit von dem Ofenzustand und den Informationen über die Veränderung der Produktion mit der Zeit die verschiedenen Sollwerte definiert, die allen Stellgliedern des Ofens derart vorzuschreiben sind, dass für jede Produktionsphase die optimale Fahrweise sichergestellt wird, wobei diese Stellwerte Eingangswerte für den Fuzzylogik-Algorithmus darstellen, der für die Fahrweise des Ofens sorgt, umfasst.

2. Regelungsvorrichtung nach Anspruch 1, **dadurch gekennzeichnet, dass** sie außerdem eine Lern- oder Recheneinrichtung enthält, die in der Lernphase des neuronalen und/oder Fuzzylogik-Vorhersagesystems, d.h. in der Phase der Erfassung der Gesetze der Arbeitsweise des Ofens, verwendet wird.

3. Regelungsvorrichtung nach Anspruch 2, **dadurch gekennzeichnet, dass** in der Lern- oder Recheneinrichtung ein numerisches Rechenmodell verwendet wird, das es erlaubt, die Gesetze, welche die Arbeitsweise des Ofens regieren, entweder aus dem Lernprozess des Vorhersagesystems am eigentlichen Ofen oder durch Simulation der Arbeitsweise des Ofens mit Hilfe eines mathematischen Modells zu definieren.

4. Regelungsvorrichtung nach einem der Ansprüche 1 bis 3, **dadurch gekennzeichnet, dass** sie darüber hinaus ein Mittel zur Aufnahme und Verarbeitung eines Bildes vom Ofeninneren enthält, das im sichtbaren, infraroten oder einem anderen Spektrum arbeitet und aus einer oder mehreren Videokameras bestehen kann, die im Ofen angebracht ist/sind, um Bereiche zu beobachten, die einem Phänomen entsprechen, das mit dem Schmelzen und/oder Läutern des Glases verbunden ist, wobei anschließend die so erhaltenen Bilder derart verarbeitet werden, dass Informationen über das beobachtete Phänomen gewonnen werden, die umgeformt werden, um als Eingangsdaten in den Algorithmus für die Ofenfahrweise eingegeben zu werden, um das beobachtete Phänomen zu kontrollieren und zu regeln.

5. Regelungsvorrichtung nach Anspruch 4, **dadurch gekennzeichnet, dass** das Phänomen, das von dem. Mittel zur Aufnahme und Verarbeitung des Bildes vom Ofeninneren beobachtet worden ist, die Verteilung der in den Ofen eingelegten Glaszusammensetzung, die Lage der Klumpen und deren Geschwindigkeit sowie verschiedene Parameter, die mit dem Aussehen der Schmelze der Zusammensetzung an der Oberfläche des Glasbads verknüpft sind, ist.

6. Regelungsvorrichtung nach Anspruch 4, **dadurch gekennzeichnet, dass** das Phänomen, das von dem Mittel zur Aufnahme und Verarbeitung des Bildes vom Ofeninneren beobachtet worden ist, Form und Verteilung der Flammen im Ofeninneren ist, um die Verteilung der Wärmeleistung zu regeln und den Verschleiß des Feuerfestmaterials, insbesondere der Wände und der Decke des Ofens, zu begrenzen.

7. Regelungsvorrichtung nach Anspruch 4, **dadurch gekennzeichnet, dass** das Phänomen, das von dem Mittel zur Aufnahme und Verarbeitung des Bildes vom Ofeninneren beobachtet worden ist, die Bewegung der Konvektionsströme im Glasbad ist, insbesondere, um das Schmelzen und/oder Läutern dieses Glases zu optimieren, die Qualität zu kontrollieren und den Verschleiß des Feuerfestmaterials zu begrenzen, aus welchem die Schmelzwanne im Glasschmelzofen gebildet ist.

8. Regelungsvorrichtung nach Anspruch 4, **dadurch gekennzeichnet, dass** das Phänomen, das von dem Mittel zur Aufnahme und Verarbeitung des Bildes vom Ofeninneren beobachtet worden ist, die Arbeitsweise der Gaseinleitungen ist.

9. Regelungsvorrichtung nach einem der vorhergehenden Ansprüche, **dadurch gekennzeichnet, dass** das neuronale oder Fuzzylogik-Vorhersagesystem derart entworfen ist, dass es Informationen liefert, die von der Fuzzy-Regelung zum Definieren der Sollwerte verwendet werden, die den verschiedenen Stell- und Kontrollgliedern der Ofenausrüstung, insbesondere in Abhängigkeit von den Veränderungen des Produktionsprogramms oder der in den Ofen eingelegten Stoffe, vorgeschrieben werden sollen.

## Claims

1. Device for monitoring the fusion of the vitrifiable mixture in a glass fusion furnace, which automatically performs all or some of the set of operations for monitoring operating parameters of the furnace and all or some of the set of operations for controlling the furnace actuators on the basis of strategies carried out by an operator performing these operations manually, this device being **characterised in that** it comprises:
- an analysis and monitoring device of the fuzzy controller type employing a fuzzy logic type command algorithm which receives the set of information relating to operation of the furnace originating from the sensors and detection means provided on this furnace as well as the reference values introduced manually by the operators, this control algorithm delivering control signals to the various actuators and furnace monitoring means and
- a neural and/or fuzzy type predicting system which, depending on the state of the furnace and information on the progress in production over time defines the various reference values to be attributed to the set of furnace actuators so as to ensure optimum operation during each phase of production, said reference values constituting input values for the fuzzy logic algorithm for managing the furnace.

2. Monitoring device according to claim 1, **characterised in that** it also comprises a learning or calculating device which is used during the learning phase of the neural and/or fuzzy type predicting system, in other words during the phase of acquisition of the laws of operation of the furnace.

3. Monitoring device according to claim 2, **characterised in that** the learning or calculating device employs a calculation model of the digital model type for defining the laws governing operation of the furnace, either on the basis of the learning of said predictive system on the actual furnace or by simulating operation of the furnace by means of a mathematical model.

4. Monitoring device according to any of claims 1 to 3, **characterised in that** it also comprises a means for acquisition and processing of the image of the interior of the furnace operating in the visible, infrared or other spectrum, which may consist of one or more video cameras positioned in the furnace in order to observe zones corresponding to a phenomenon linked with the fusion and/or refining of the glass, the images obtained in this way then being processed in order to obtain information relating to the observed phenomenon, this information being shaped in order to be introduced as input data of the furnace management algorithm in order to monitor and regulate the observed phenomenon.

5. Monitoring device according to claim 4, **characterised in that** said phenomenon observed by the means for acquisition and processing of the image of the interior of the furnace is the distribution of the glass composition introduced into the furnace, the position of the lumps, the speed thereof as well as various parameters linked to the appearance of the fusion of the composition at the surface of the bath of glass.

6. Monitoring device according to claim 4, **characterised in that** said phenomenon observed by the means for acquisition and processing of the image of the interior of the furnace is the shape and distribution of the flames thereof inside the furnace, in order to monitor the distribution of the thermal power and to limit the wear of the refractory materials, in particular of the walls and roof of the furnace.

7. Monitoring device according to claim 4, **characterised in that** said phenomenon observed by the means for acquisition and processing of the image of the interior of the furnace is the movement of the convection currents in the bath of glass, in particular in order to optimise the fusion and/or refinement of said glass, to monitor the quality thereof and to limit the wear of the refractory materials making up the retaining tank in the glass fusion furnace.

8. Monitoring device according to claim 4, **characterised in that** said phenomenon observed by the means for acquisition and processing of the image of the interior of the furnace is the operation of the boilers.

9. Monitoring device according to any of the preceding claims, **characterised in that** the predicting system of the fuzzy or neural logic type is designed to deliver information used by the fuzzy controller to define the reference values to be applied to the various control and monitoring actuators of the furnace equipment as a function, in particular, of the modifications to the production programme or modifications to the substances introduced into the furnace.
